# EUROPÄISCHE PATENTANMELDUNG

(11) **EP 1 591 698 A1**
(43) Veröffentlichungstag der Anmeldung: **02.11.2005**
(21) Anmeldenummer: 05001287.1
(22) Anmeldetag: 22.01.2005
(51) Int. Cl.: F16J 15/32

(54) **Radialwellendichtring**

(30) Priorität: 28.04.2004 DE 102004020965
(71) Anmelder: Carl Freudenberg KG, 69469 Weinheim (DE)
(72) Erfinder: Naszek, Attila, 6000 Kecskernet (HU); Vogt, Rolf, 68723 Oftersheim (DE)

(57) **Zusammenfassung**

Radialwellendichtring mit einem Stützring und einem daran durch Vulkanisation angefügten Dichtelement aus einem elastomeren Werkstoff, der eine Dichtlippe hat, die bei nicht eingebautem Dichtring in radialer Richtung vom Stützring absteht und in ein Gehäuse eingebaut mit seiner Dichtfläche die Welle umfasst, wobei die Dichtlippe (4) unter eigener elastischer Vorspannung an der Welle (6) anliegt und die Dichtfläche (5) durch einen die Welle (6) umfassenden, die Leckageflüssigkeit zurück haltenden und zurück fördernden Oberflächenabschnitt (9) gebildet ist, wobei die Abschlussfläche (10) der Dichtlippe (4) bei eingebautem Dichtelement (3) zum abzudichtenden Innenraum (11) des Gehäuses gerichtet ist und die Dichtlippe (4) auf ihrer Rückseite (13) eine Profilierung (16) aufweist.

## Beschreibung

Die Erfindung betrifft einen Radialwellendichtring mit einem Stützring und einem daran durch Vulkanisation angefügten Dichtelement aus einem elastomeren Werkstoff, dass mit seiner Dichtlippe an der Welle anliegt, wobei die Dichtlippe bei nicht eingebautem Dichtring in radialer Richtung vom Stützring absteht und, in ein Gehäuse eingebaut mit seiner Dichtfläche die Welle umfasst.

### Technisches Gebiet

Dichtringe dieser Art sind weit verbreitet und werden eingesetzt, um einen mit einer Flüssigkeit gefüllten Innenraum gegenüber der Umgebung abzudichten. Dabei soll die Abdichtung sowohl statisch bei stillstehender Welle als auch dynamisch bei rotierender Welle eine gute Abdichtung ergeben. Eine Leckage soll weitgehend vermieden werden. Darüber hinaus sollen die Dichtungen auch bei unterschiedlichen Drehrichtungen der Welle dicht sein. Die Dichtlippe wird dabei durch eine Feder zusätzlich an die Welle gepresst.

Bekannt sind auch Dichtringe, die ohne Federn wirksam sind. Hier werden vor allem Dichtscheiben aus PTFE eingesetzt. Da der Werkstoff PTFE hornartig ist und im Vergleich zu einem Elastomer keinen natürlichen Dichtmechanismus besitzt, werden Dichtungen aus PTFE mit einem Fördergewinde versehen. Dadurch ist die dynamische Dichtheit in eine Drehrichtung gewährleistet. Es kommt bei Drehrichtungswechsel jedoch sofort zur Leckage. Desweiteren sind diese Dichtungen oftmals statisch undicht, vor allem wenn der Mediumstand höher ist als die Unterkante der Welle.

### Stand der Technik

Durch die DE 35 01 065 A1 ist ein Radialwellendichtring bekannt geworden, bei dem die Dichtlippe aus PTFE besteht und kalt in Richtung des abgedichteten Raumes vorgewölbt ist. Die Befestigung der Dichtlippe in einer Halterung ist schwierig.

Bekannt sind auch Radialwellendichtringe, bei denen die aus Polytetrafluorethylen bestehende Dichtlippe zwischen zwei Klemmringen gehalten wird, wie es beispielsweise in der DE 36 07 662 A1 gezeigt ist. Um eine höhere Flexibilität zu erreichen wird die Dichtscheibe beidseitig mit rillenförmigen Querschnitten versehen. Die damit erreichte Flexibilität der Dichtlippe ist in vielen Fällen jedoch ebenfalls nicht ausreichend.

### Darstellung der Erfindung

Der Erfindung liegt die Aufgabe zu Grunde, einen verbesserten Radialwellendichtring zu schaffen, der eine zuverlässige Abdichtung unabhängig von der Drehrichtung auch über längere Zeit ergibt.

Die Lösung der gestellten Aufgabe wird mit den Merkmalen des Anspruchs 1 erreicht.

Bei dem Radialwellendichtring gemäß der Erfindung wird die Dichtlippe aus einem Elastomer hergestellt und liegt unter eigener Vorspannung an der Welle an. Das Elastomer ist so elastisch, dass es jeder Wellenbewegung folgen kann. An der Dichtlippe wird eine Dichtfläche gebildet, die aus einem die Welle umfassenden und die Leckageflüssigkeit zurück haltenden und zurück fördernden Oberflächenabschnitt besteht, wobei die Abschlussfläche der Dichtlippe bei eingebautem Dichtelement zum abzudichtenden Innenraum des Gehäuses gerichtet ist und die Dichtlippe auf ihrer Rückseite eine Profilierung hat. Durch die Dichtfläche wird eine gute statische Abdichtung bei stehender Welle erzielt. Auch wird die Leckageflüssigkeit bei drehender Welle zurück gehalten bzw. zurück gefördert. Dabei ist es von Bedeutung, dass die Abschlussfläche der Dichtlippe bei eingebautem Dichtelement zum abzudichtenden Innenraum des Gehäuses gerichtet ist. Sehr wichtig ist dabei die Profilierung auf der Rückseite der Dichtlippe. Durch die Profilierung wird erreicht, dass im Dichtkantenbereich eine spezifische, mikroskopisch wirksame Anpressungsverteilung entsteht, welche einen Dichtmechanismus hervorruft. Dieser ist in der Lage immer vorhandene Leckageflüssigkeit in den abzudichtenden Raum zurückzufördern. Durch diesen Effekt benötigt die Dichtung kein Fördergewinde und kann zuverlässig in beide Drehrichtungen betrieben werden.

Um die Zurückhaltung bzw. Zurückförderung der Leckageflüssigkeit durch den Oberflächenabschnitt zu erreichen, ist dieser makroskopisch glatt ausgebildet. In Versuchen zeigte sich, dass bei dieser Ausführungsform sehr gute Abdichtungsergebnisse erzielt werden. Die Oberflächenrauhigkeit des Oberflächenabschnitts liegt dabei unter 10 µm.

Von Einfluss auf die Abdichtwirkung ist des weiteren die Überdeckung der Dichtfläche auf der Welle. In Versuchen wurde ermittelt, dass die Überdeckung beste Ergebnisse zeigt, wenn sie etwa 3% bis 10% des Wellendurchmessers beträgt. In vielen Anwendungsgebieten, bei denen der Wellendurchmesser 45 mm beträgt, wird eine Überdeckung von 2 bis 5 mm gewählt.

Um zu verhindern, dass Schmutzteile oder Ähnliches aus dem Innenraum unter die Dichtwulst gelangen, ist die Abschlussfläche der Dichtlippe zur Oberfläche der Welle so ausgerichtet, dass sie einen Winkel α bildet, der zwischen 50° und 95° beträgt. Auf der Außenseite entsteht bei eingebautem Dichtelement an der Dichtlippe ein Winkel β zwischen 0° und 30°. Beste Ergebnisse ergeben Winkel α = 87° und β = 7°.

Von Vorteil ist, wenn die Dichtfläche gegenüber dem Durchmesser der Welle außermittig versetzt ist. Dieser Versatz kann relativ klein gewählt werden und liegt in der Größenordnung von ca. 10 % der gewählten Überdeckung. Durch diesen Versatz wird eine zusätzliche Pumpwirkung bei der dynamischen Abdichtung erreicht.

Die Montage des Dichtrings und der Welle zueinander ist ohne besondere Hilfsmittel möglich. Es wird bei einer vormontierten Dichtung die Welle in die dafür vorgesehene Öffnung eingeschoben und die Dichtlippe legt sich in der gewünschten Weise und mit einer dann eintretenden Krümmung der Dichtlippe und der vorgesehenen Überdeckung der Dichtfläche an der Welle an. Um auch ein Aufschieben der Dichtung auf eine vormontierte Welle zu ermöglichen und dabei dasselbe Prinzip der Abdichtung beizubehalten, wird die Dichtfläche durch einen am Ende der Dichtlippe ausgebildeten Absatz hergestellt. Dieser Absatz enthält den Oberflächenabschnitt der Dichtfläche. Die Abschlussfläche der Dichtlippe ist auch hier zum abzudichtenden Innenraum des Gehäuses gerichtet. Die geometrischen Verhältnisse der Kontaktzone werden daher beibehalten.

Der Dichtring wird mit einem üblichen Stützring versehen. Bevorzugt wird der Stützring jedoch aus einem abgewinkelten Metallring gebildet, dessen äußerer axial auslaufender Ringteil zumindest teilweise von dem elastomeren Werkstoff des Dichtelements umfasst ist und als Klemm- bzw. statischer Dichtring in das Gehäuse eingefügt ist und dessen innerer, radial ausgerichteter Ringteil an seinem innen liegenden Rand vom Werkstoff des Dichtelements eingefasst ist.

Des Weiteren kann das Dichtelement mit einer Staublippe versehen sein oder auch auf der Außenseite des Dichtelements einen Haltering haben, der zur Abstützung der Dichtlippe bei zu starker Ausformung dient, die bei höheren Drücken im Innenraum möglich ist.

### Kurzbeschreibung der Zeichnungen

Anhand der in den Zeichnungen dargestellten Ausführungsbeispiele wird die Erfindung nachstehend näher erläutert.

Es zeigen:
- Figur 1:: in vergrößerter Darstellung die prinzipielle Ausführungsform der Dichtlippe an einer Welle anliegend,
- Figur 2:: die Dichtlippe in Kombination mit einem Stützring und einer Schmutzlippe aus einem Vlies.
- Figur 3:: eine Ausführungsform der Dichtlippe mit einem Absatz für die Dichtfläche
- Figur 4:: die Dichtlippe mit angeformter Schmutzlippe und
- Figur 5:: einen Dichtring mit zwei Dichtlippen.

### Ausführung der Erfindung

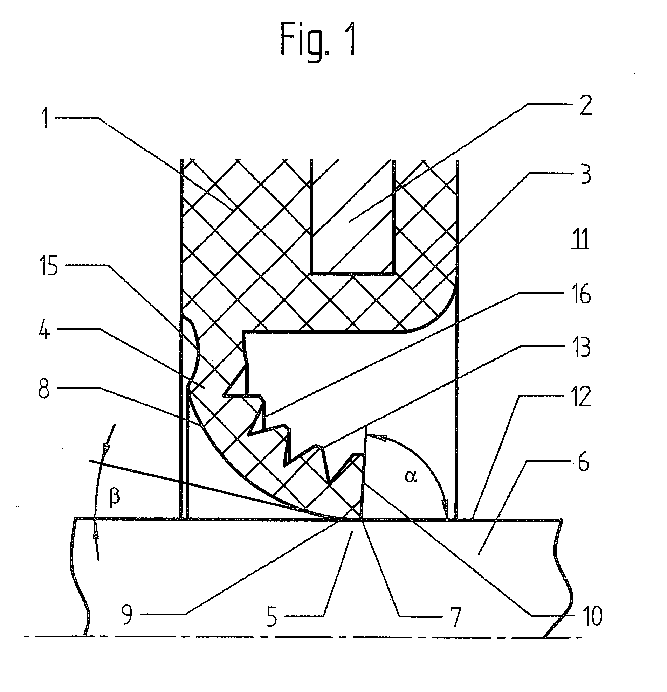

In der Figur 1 ist schematisch ein Teil des Radialwellendichtrings 1 im Schnitt gezeigt. An dem Stützring 2 ist das Dichtelement 3 anvulkanisiert. Das Dichtelement 3 besteht aus einem elastomeren Werkstoff und hat die Dichtlippe 4, die unter eigener elastischer Vorspannung mit ihrer Dichtfläche 5 die Welle 6 umfasst. Die Dichtfläche 5 wird durch die Kante 7 der Dichtlippe 4 und einen auf der Außenfläche 8, d.h. auf der nach außen gerichteten Seite der Dichtlippe 4 vorhanden kurzen Oberflächenabschnitt 9 gebildet. Dabei ist die Abschlussfläche 10 der Dichtlippe 4 zum abzudichtenden Innenraum 11 eines nicht näher dargestellten Gehäuses gerichtet. Die Abschlussfläche 10 der Dichtlippe 4 nimmt dabei zur Oberfläche 12 der Welle 6 einen Winkel α ein, der etwa 87° beträgt. Dieser Winkel α ist größer als der Winkel β, der zwischen der nach außen gerichteten Fläche 8 der Dichtlippe 4 und der Wellenoberfläche 12 entsteht. Der Winkel β beträgt im Ausführungsbeispiel ca. 15°. Der Oberflächenabschnitt 9 und auch die Kante 7 sind makroskopisch glatt ausgebildet und haben eine Oberflächenrauhigkeit, die unter 10 µm liegt. Die der Dichtfläche 5 gegenüber liegende Rückseite 13 der Dichtlippe 4 ist mit einer Profilierung 16 versehen. In Versuchen zeigte sich, dass diese Profilierung 16 mit entscheidend für die gute Dichtwirkung des Dichtrings 1 ist. Dichtringe ohne diese Profilierung 16 ergaben deutlich schlechtere Dichtresultate. Über die Verjüngung 15 wird die Biegefähigkeit der Dichtlippe 4 noch unterstützt.

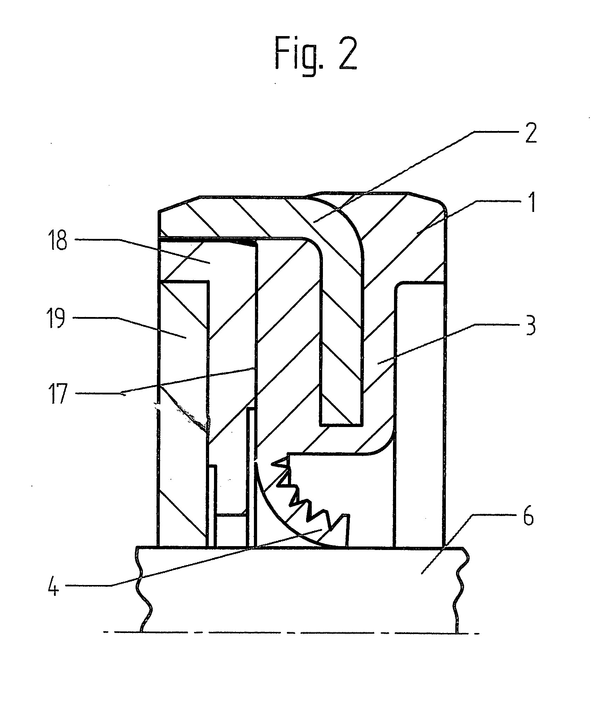

Die Figur 2 zeigt den Radialwellendichtring 1 mit Stützring 2, Dichtelement 3 und einem auf der Außenseite 17 des Dichtelements 3 angefügten Haltering 18, der zur Abstützung der Dichtlippe 4 dient, wenn dieselbe durch zu hohen Innendruck nach außen gedrückt wird. Da die Dichtlippe 4 aus biegeweichem Material gefertigt ist, sind solche Situationen nicht auszuschließen. Darüber hinaus ist der Dichtring 1 mit einer aus einem Vlies bestehenden Staublippe 19 versehen.

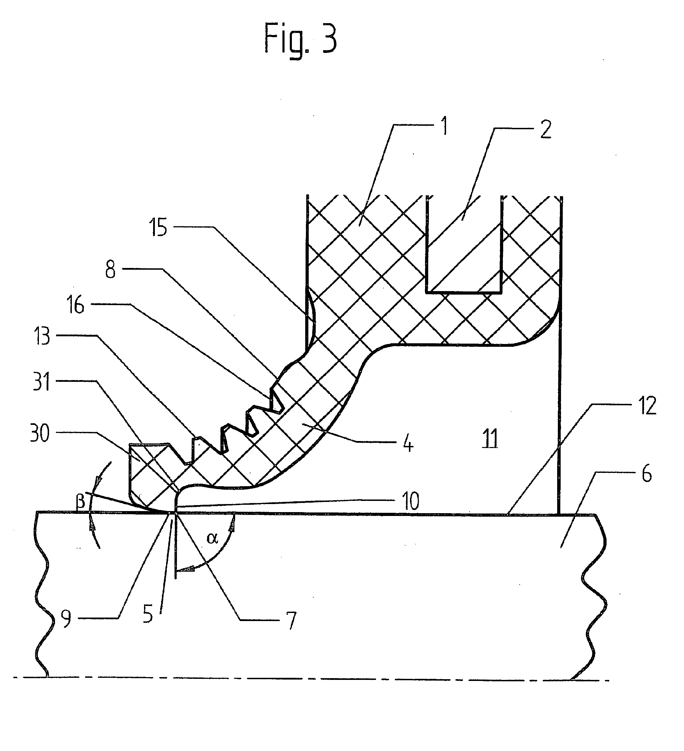

In der Figur 3 ist ein Ausführungsbeispiel gezeigt, bei dem die Dichtfläche 5 an einem Absatz 30 am unteren Ende der Dichtlippe 4 angebracht ist. Dieser Absatz 30 kann durch eine Verjüngung 31 der Dichtlippe 4 hergestellt werden. Diese Ausführungsform ist für den Fall gedacht, dass der Dichtring 1 auf die Welle 6 während der Montage aufgeschoben wird. Die Abschlussfläche 10 ist auch hier zum Innenraum 11 des Gehäuses gerichtet. Kante 7 und Oberflächenabschnitt 9 ergeben auch hier eine gute statische und dynamische Abdichtung.

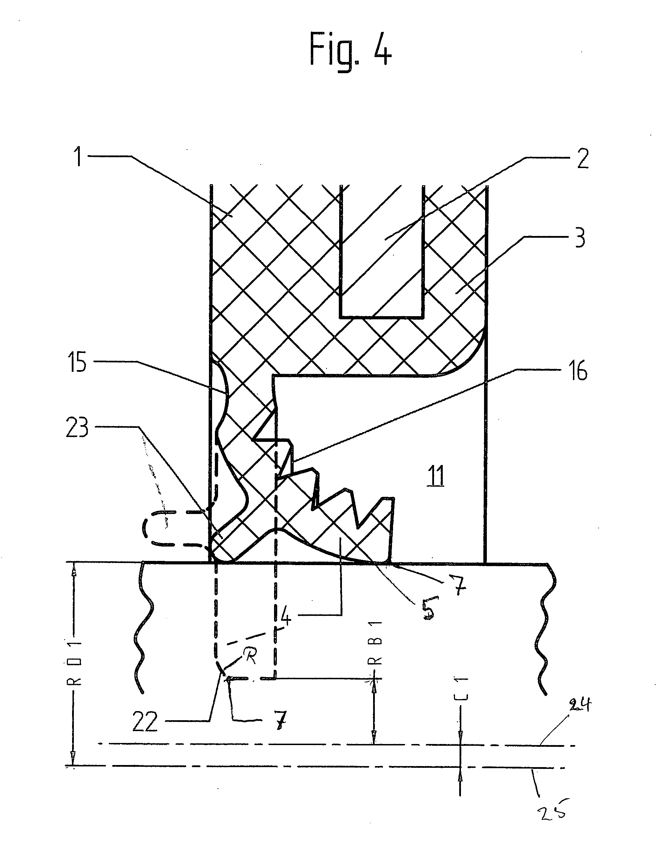

In der Fig. 4 ist der Dichtring 1 mit einer Schmutz- oder Staublippe 23 gezeigt, die integral mit dem Dichtelement 3 verbunden ist und die beim Aufdehnen der Dichtlippe 4 während des Aufsetzens auf die Welle 6 eine vorher bestimmte Lage einnimmt und dabei Kontakt zur Welle 6 haben kann. Gestrichelt ist die Lage der Dichtlippe 4 im nichteingebauten Zustand dargestellt. Dabei ist die Krümmung R an der Dichtlippe 4 sichtbar, die bei dieser Ausführungsform im Dichtflächenbereich 22 vorhanden ist. Günstig ist es, wenn der Dichtflächenbereich 22 mit der Dichtfläche 5 übereinstimmt. Hierdurch wird die gute Anlage der Dichtfläche 5 an der Welle 6 unterstützt, insbesondere die Elastizität der Dichtlippe 4 wird zusätzlich verbessert. Die Dichtkante 7 bleibt erhalten.

Eine besonders gute Abdichtung durch die Dichtlippe 4 wird erreicht, wenn die Überdeckung der Dichtlippe 4 3% bis 10% des Wellendurchmessers 2RD1 beträgt. Vorteilhaft ist ein Versatz C1 der Mittellinie 24 der Dichtlippe 4 zur Mittellinie 25 der Welle 6. Durch den Versatz C1 ergeben sich örtlich unterschiedliche Anpressungen der Dichtlippe 4 auf der Welle 6 und eine über den Umfang der Welle 6 versetzte, sinusförmig verlaufende Kante 7, was zu einem deutlich besseren Schmierstoffaustausch führt.

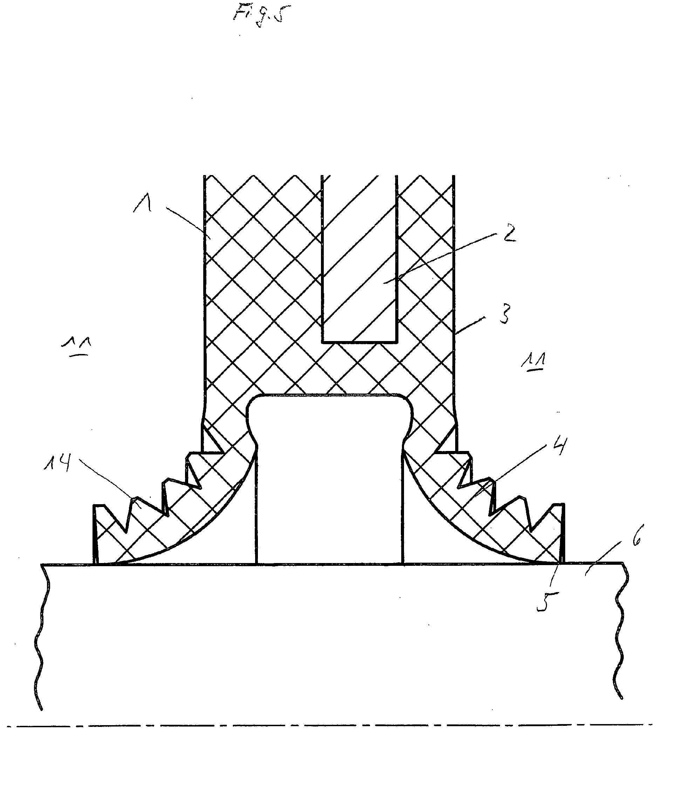

In der Figur 5 ist eine Dichtung 1 mit zwei Dichtlippen 4 und 14 gezeigt. Die Dichtlippen 4 und 14 sind symmetrisch zueinander ausgebildet und angeordnet. Eine solche Ausgestaltung ist vorzusehen, wenn zwei flüssige Medien aus den Räumen 11 voneinander zu trennen sind. Beide Lippen 4 und 14 sind zu einem Dichtelement 3 zusammengefasst. Die doppelte Anordnung der Dichtlippen 4 und 14 hat den Vorteil, dass zwischen den Lippen 4, 14 eine Unterdruckbildung nicht entstehen kann.

## Patentansprüche

1. Radialwellendichtring mit einem Stützring und einem daran durch Vulkanisation angefügten Dichtelement aus einem elastomeren Werkstoff, der eine Dichtlippe hat, die bei nicht eingebautem Dichtring in radialer Richtung vom Stützring absteht und in ein Gehäuse eingebaut mit seiner Dichtfläche die Welle umfasst, **dadurch gekennzeichnet, dass** die Dichtlippe (4) unter eigener elastischer Vorspannung an der Welle (6) anliegt und die Dichtfläche (5) durch einen die Welle (6) umfassenden, die Leckageflüssigkeit zurück haltenden und zurück fördernden Oberflächenabschnitt (9) gebildet ist, wobei die Abschlussfläche (10) der Dichtlippe (4) bei eingebautem Dichtelement (3) zum abzudichtenden Innenraum (11) des Gehäuses gerichtet ist und die Dichtlippe (4) auf ihrer Rückseite (13) eine Profilierung (16) aufweist.

2. Radialwellendichtring nach Anspruch 1, **dadurch gekennzeichnet, dass** die an der Welle (6) anliegende Dichtfläche (5) des Oberflächenabschnitts (9) makroskopisch glatt ausgebildet ist.

3. Radialwellendichtring nach einem der Ansprüche 1 oder 2, **dadurch gekennzeichnet, dass** die Oberflächenrauhigkeit der anliegenden Dichtfläche (5) des Oberflächenabschnitts (9) unter 10 µm liegt.

4. Radialwellendichtring nach einem der Ansprüche 1 bis 3, **dadurch gekennzeichnet, dass** die Überdeckung (2RD1 - 2RB1) der Dichtflippe (4) 3% bis 10% des Wellendurchmessers (2RD1) beträgt.

5. Radialwellendichtring nach einem der Ansprüche 1 bis 4, **dadurch gekennzeichnet, dass** die Überdeckung (2RD1 - 2RB1) der Dichtflippe (4) 2 bis 5 mm beträgt.

6. Radialwellendichtring nach einem der Ansprüche 4 oder 5, **dadurch gekennzeichnet, dass** der Versatz (C1) 1 % des Wellendurchmessers D beträgt.

7. Radialwellendichtring nach Anspruch 6, **dadurch gekennzeichnet, dass** der Versatz 0,05 bis 0,3 mm beträgt.

8. Radialwellendichtring nach einem der Ansprüche 1 bis 7, **dadurch gekennzeichnet, dass** die Abschlussfläche (10) der Dichtlippe (4) bei eingebautem Dichtelement (3) zur Oberfläche (12) der Welle (6) einen Winkel α bildet, der zwischen 50° und 95° liegt.

9. Radialwellendichtring nach einem der Anspruch 1 bis 8, **dadurch gekennzeichnet, dass** die Dichtfläche (5) der Dichtlippe (4) bei eingebautem Dichtelement (3) zur Oberfläche (12) der Welle (6) einen Winkel β bildet, der zwischen 0 und 30° beträgt.

10. Radialwellendichtring nach einem der Ansprüche 1 bis 9, **dadurch gekennzeichnet, dass** die Dichtlippe (4) eine die Elastizität der Dichtlippe (4) unterstützende Verjüngung (15) aufweist.

11. Radialwellendichtring nach einem der Ansprüche 1 bis 10, **dadurch gekennzeichnet, dass** der Dichtflächenbereich (22) der Dichtlippe (4) leicht gekrümmt ist mit einem Radius R, der 02, bis 0,8 mm beträgt.

12. Radialwellendichtring nach einem der Ansprüche 1 bis 11, **dadurch gekennzeichnet, dass** die Dichtfläche (5) an einem am Ende der Dichtlippe (4) ausgebildeten Absatz (30) angebracht ist.

13. Radialwellendichtring nach einem der Ansprüche 1 bis 12, **dadurch gekennzeichnet, dass** der Stützring (2) aus einem abgewinkelten Metallring (24) besteht, dessen äußerer axial auslaufender Ringteil (25) zumindest teilweise von dem elastomeren Werkstoff des Dichtelements (3) umfasst ist und als Klemm- bzw. statischer Dichtring in das Gehäuse eingefügt ist und dessen innerer radial ausgerichteter Ringteil (26) an seinem innen liegenden Rand (27) vom Werkstoff des Dichtelements (3) eingefasst ist.

14. Radialwellendichtring nach einem der Ansprüche 1 bis 13, **dadurch gekennzeichnet, dass** das das Dichtelement (3) eine Staublippe (23) hat, welche einstückig mit der Dichtlippe (4) verbunden ist.

15. Radialwellendichtring nach einem der Ansprüche 1 bis 14, **dadurch gekennzeichnet, dass** auf der Außenseite (17) des Dichtelements (3) ein Haltering (18) angebracht ist, der zur Abstützung der Dichtlippe (4) bei zu starker Ausformung dient.

16. Radialwellendichtring nach einem der Ansprüche 1 bis 15, **dadurch gekennzeichnet, dass** zwei Dichtlippen (4, 14) zur abdichtenden Trennung zweier flüssiger Medien gegenüberliegend angeordnet sind.

17. Radialwellendichtring nach Anspruch 16, **dadurch gekennzeichnet, dass** die Dichtlippen (4, 14) symmetrisch zueinander angeordnet und / oder ausbgebildet sind.
